# EUROPÄISCHE PATENTSCHRIFT

(11) **EP 1 362 630 B1**
(45) Veröffentlichungstag und Bekanntmachung des Hinweises auf die Patenterteilung: **10.10.2007**
(21) Anmeldenummer: 03007189.8
(22) Anmeldetag: 29.03.2003
(51) Int. Cl.: B01D 53/22, B01D 69/10, B01D 69/12, B01D 71/02, C01B 3/50

(54) **Kompositmembran und Verfahren zu deren Herstellung**
Composite membrane and method for its production
Membrane composite et procédé pour sa fabrication

(30) Priorität: 17.05.2002 DE 10222568
(43) Veröffentlichungstag der Anmeldung: 19.11.2003
(73) Patentinhaber: W.C. Heraeus GmbH, 63450 Hanau (DE)
(72) Erfinder: Jantsch, Uwe, Dr., 63579 Freigericht (DE); Giesel, Thomas, 63526 Erlensee (DE); Lupton, David, Dr., 63571 Gelnhausen (DE)
(74) Vertreter: Kühn, Hans-Christian

(56) Entgegenhaltungen:
- US-A- 5 259 870
- US-A- 5 645 626
- US-A1- 2002 020 298
- US-B1- 6 379 524
- SHU J ET AL: "Structurally stable composite Pd-Ag alloy membranes: Introduction of a diffusion barrier" THIN SOLID FILMS, ELSEVIER-SEQUOIA S.A. LAUSANNE, CH, Bd. 286, Nr. 1, 30. September 1996 (1996-09-30), Seiten 72-79, XP004049419 ISSN: 0040-6090
- PATENT ABSTRACTS OF JAPAN vol. 018, no. 075 (C-1163), 8. Februar 1994 (1994-02-08) -& JP 05 285357 A (MITSUBISHI HEAVY IND LTD), 2. November 1993 (1993-11-02)
- PATENT ABSTRACTS OF JAPAN vol. 017, no. 400 (C-1089), 27. Juli 1993 (1993-07-27) -& JP 05 076737 A (MITSUBISHI HEAVY IND LTD), 30. März 1993 (1993-03-30)

## Beschreibung

Die Erfindung betrifft eine Kompositmembran mit einem flexiblen metallischen Substrat und einem auf mindestens einer Oberfläche des Substrats angeordneten Schichtsystem, wobei das Schichtsystem aus einer starren, nicht-selbsttragenden, nicht-metallisch anorganischen Diffusionssperrschicht und mindestens einer wasserstoffpermeablen, nicht-porösen metallischen Membranschicht gebildet ist, wobei die Diffusionssperrschicht zwischen dem Substrat und der mindestens einen Membranschicht angeordnet ist und aus mindestens einer Einzelschicht gebildet ist. Die Erfindung betrifft weiterhin ein Verfahren zur Herstellung einer solchen Kompositmembran.

Derartige Membranen sind beispielsweise aus der EP 783 919 A1, der JP-405076737-A, der JP-405285357-A, der US-2002/0020298-A oder der EP 718 031 A1 bekannt. Hier ist eine Kompositmembran offenbart, die einen Träger aus wasserstoffdurchlässigem Metall oder wasserstoffdurchlässiger Keramik aufweist, wobei der Träger sowohl flexibel als auch starr sein kann. Der Träger kann dabei porös ausgebildet sein, wobei ein Gewebe aus Edelstahl verwendet werden kann. Auf diesem Träger befindet sich entweder eine poröse, flexible Diffusionssperrschicht, die aus einem nicht gesinterten Material, wie beispielsweise Filz, Papier oder Fasermatten besteht. Weiterhin ist offenbart, dass auch eine starre Diffusionssperrschicht verwendet werden kann, wenn die darüber angeordnete wasserstoffpermeable Membranschicht texturiert ausgeführt wird. Als Materialien für eine starre Diffusionssperrschicht sind Oxide, Sulfide, Nitride, Carbide und Silizide offenbart. Es wird darauf hingewiesen, dass diese starren Diffusionssperrschichten häufig Risse aufweisen. Die über der Diffusionssperrschicht angeordnete wasserstoffpermeable Membranschicht ist bei Verwendung einer starren Diffusionssperrschicht texturiert, während dies bei Verwendung einer porösen, flexiblen Diffusionssperrschicht nicht unbedingt erforderlich ist. Die Membranschicht wird aus Metallen der Gruppe VII b oder VIII b gebildet, wobei hier insbesondere die Metalle Fe, Mn, Ni, Pd, Pt und Ru genannt sind. Die wasserstoffpermeable Membranschicht kann auf der porösen, flexiblen Diffusionssperrschicht beispielsweise durch galvanische Abscheidung gebildet sein. Die auf der star-ren Diffusionssperrschicht erforderliche texturierte Membranschicht wird zur Bildung der Kompositmembran als selbsttragendes, verformtes Metallblech ausgebildet.

US 5,393,325 beschreibt eine Kompositmembran mit einem nicht-porösen, wasserstoffpermeablen Metallträger, auf welchem eine nicht-metallische Diffusionssperrschicht angeordnet ist. Als Materialien für die Diffusionssperrschicht sind Oxide, Sulfide, Karbide, Nitride oder Silizide offenbart. Als bevorzugte Materialien werden dabei Aluminiumoxid, Lanthanoxid, Molybdänoxid, Siliziumdioxid, Wolframoxid, Yttriumoxid und Vanadiumsulfid genannt. Auf der Diffusionssperrschicht ist eine nicht-poröse, wasserstoffpermeable Metallschicht aus beispielsweise Pd, Pt, Fe, Ru, Ni oder Mn angeordnet.

WO 99/33545 offenbart eine Trägerstruktur aus porösem Edelstahl, deren Oberfläche mit einem feinen Nickelpulver versintert wurde. Die so vorbehandelte Oberfläche wird galvanisch mit Kupfer beschichtet und anschließend mit einer weiteren galvanischen Schicht aus einer wasserstoffpermeablen Metalllegierung, wie z. B. einer Palladiumlegierung, versehen.

EP 0 348 041 B1 beschreibt eine Kompositmembran mit einem anorganischen Träger aus Fasern, dessen Faserzwischenräume einen Durchmesser > 5 µm und eine Länge kleiner als das Zehnfache des Durchmessers aufweisen. Der anorganische Träger ist mit einem porösen anorganischen Film beschichtet, der aus nicht-metallischen, gesinterten Teilchen besteht und eine Porengröße von bis zu 2 µm aufweist. Als Trägermaterialien sind hier Glas-, Mineral- oder Metallfasermaterialien offenbart. Für den porösen, anorganischen Film sind Metalloxide, wie beispielsweise Titandioxid, Aluminiumoxid, Ceroxid, Zirkondioxid, Mullit oder Mischungen daraus vorgeschlagen. Es ist erwähnt, dass durch Biegen der Membrane Risse im porösen, anorganischen Film auftreten können.

US 4,468,235 offenbart eine wasserstoffpermeable Membran mit einem nicht-porösen Träger aus einer Titanlegierung, welcher mit einem Metall oder einer Metalllegierung der Gruppe Palladium, Nickel, Kobalt, Eisen, Vanadium, Niob oder Tantal beschichtet ist. Diese Beschichtung wird galvanisch oder durch Sputtern auf dem Träger erzeugt.

WO 90/09231 beschreibt eine Wasserstoff-Permeationsmembran mit einem Lücken aufweisenden anorganischen Träger, wobei die Lücken durch eine Kompositschicht aus nicht-metallischen Partikeln und Metall überbrückt sind. Als Metall ist hier Palladium offenbart.

JP 346824/92 bzw. JP 76738/93 offenbart eine wasserstoffpermeable Membran aus Palladium auf einem porösen Metallträger, wobei zwischen der Membran und dem Metallträger eine keramische Barriereschicht beziehungsweise eine Metalloxid-Barriereschicht angeordnet ist.

US 5,259,870 beschreibt eine wasserstoffpermeable Kompositmembran mit einem Träger aus nicht-porösem Metall, eine Diffusionssperrschicht aus einem Metalloxid sowie eine Membranschicht aus Palladium oder Palladiumlegierung.

RU 1,058,587 offenbart eine wasserstoffpermeable Membran mit einem Metallträger, welcher mit einer Schicht aus Palladium oder Palladiumlegierung durch Diffusionsschweißen verbunden ist. Zwischen dem Metallträger und der Schicht aus Palladium oder Palladiumlegierung sind ultrafeine Metalloxidpulver angeordnet.

Weiter Wasserstoff-Permeationsmembranen sind aus US 4,496,373, US 5,094,927, US 2,958,391, US 4,699,637, US 4,388,479, US 3,622,303, US 3,350,846, US 1,174,631, US 2,773,561, US 3,393,098 und EP 0 242 208 sowie den Veröffentlichungen "Inorganic Membrane Reactors" ( H.P. Hsieh, Catal. Rev. - Sci. Eng., 33(1&2), 1 - 70, 1991 ), "Preparation and Characterization of a Composite Palladium-Ceramic Membrane" ( P. Collins, Ind. Eng. Chem. Res., Vol. 32, No. 12, 3006 - 3013, 1993 ) oder "Hydrogen Diffusion Membranes based on some Palladium-Rare Earth Solid Solution Alloys" ( D.T. Hughes und I.R.Harris, Zeitschrift für physik. Chemie, Bd. 117, S. 185 - 193, 1979 ) bekannt

Von SHU J et al wird in 'Structurally stable composite Pd-Ag alloy membranes: Introduction of a diffusion barrier' (THIN SOLID FILMS, ELSEVIER-SEQUOIA S.A. LAUSANNE, CH, Bd. 286, Nr. 1, 30. September 1996, Seiten 72-79, ISSN: 0040-6090) ein Substrat aus gesinterten Metallpartikeln offenbart, wobei die Oberfläche der Partikeln mittels PVD mit TiN beschichtet wurde. Hierdurch wurde die Porengröße des Substrats durch die Diffusionssperrschicht in etwa abgebildet. Nach Keimbildung wurde die Platin-Membranschicht mittels stromloser Beschichtung aufgebracht.

Es stellt sich das Problem, eine effektivere Kompositmembran zur Abtrennung von Wasserstoff aus Gasgemischen bereitzustellen, die bei Einsatztemperaturen von größer als 300 °C ein Trennverhältnis von Wasserstoff zu Stickstoff von größer als 4000 erreicht.

Das Trennverhältnis wird dabei durch separate Bestimmung der Durchflussraten für reinen Stickstoff und reinen Wasserstoff durch die Kompositmembran bestimmt und gibt die Selektivität der Membran an. Es wird jeweils der Volumenstrom an Permeat durch die Kompositmembran gemessen. Das Verhältnis der Volumenströme H₂/N₂ ist vor allem ein Maß für die Dichtigkeit der Membranschicht beziehungsweise für die Anzahl an unerwünschten Poren und Fehlstellen in der Membranschicht. Ein Wert von H₂/N₂ < 500 gibt beispielsweise an, dass das Trennverhalten der Kompositmembran gering und die Anzahl an Poren oder Fehlstellen in der Membranschicht hoch ist.

Das Problem wird dadurch gelöst, dass mindestens die direkt an die Membranschicht angrenzende Einzelschicht der Diffusionssperrschicht offen-porös mit einem Porendurchmesser von 20 nm bis 500 nm ist und auf ihrer dem Substrat abgewandten Oberfläche bei einer Temperatur von 20 °C einen spezifischen elektrischen Widerstand von kleiner als 10 Ωcm aufweist, und wobei das Substrat eine offene Porosität im Bereich von 15 % bis 60 % mit Zwischenräumen, deren Durchmesser <5 µm ist, aufweist und die mindestens eine Membranschicht galvanisch auf der dem Substrat abgewandten Oberfläche der mindestens einen Diffusionssperrschicht abgeschieden ist. Unter einer starren Diffusionssperrschicht wird dabei eine spröde, kompakte und haftfest mit dem Substrat verbundene Schicht, die aus mehreren Einzelschichten bestehen kann, verstanden. Dadurch, dass die dem Substrat abgewandte Oberfläche der Diffusionssperrschicht einen niedrigen spezifischen Widerstand von kleiner als 10 Ωcm aufweist, kann eine geschlossene Membranschicht galvanisch auf dieser Oberfläche abgeschieden werden. Somit ist es möglich, eine mehrschichtige Diffusionssperrschicht einzusetzen, die beispielsweise auch elektrisch isolierende Einzelschichten beinhalten kann, solange die direkt an die Membranschicht angrenzende Einzelschicht der Diffusionssperrschicht diesen niedrigen spezifischen Widerstand aufweist. Weist die Diffusionssperrschicht auch nicht-poröse oder rissfreie Einzelschichten auf, so müssen diese aus einem wasserstoffpermeablen Material gebildet sein.

Die erfindungsgemäße Kompositmembran weist eine hohe Permeabilität für Wasserstoff auf, wobei ein Trennverhältnis von Wasserstoff zu Stickstoff von größer als 4000 erreicht wird. Obwohl es sich bei der Diffusionssperrschicht um ein starres Gebilde handelt, das bereits vor der Bildung der Membranschicht Mikrorisse aufweisen kann, wird die fertige Kompositmembran überraschender Weise nicht unbrauchbar, wenn sie leicht durchgebogen wird. Die erfindungsgemäße Kompositmembran ist außerdem unempfindlich gegenüber thermisch induzierten mechanischen Spannungen, wie sie beispielsweise bei einem Temperaturwechsel von Raumtemperatur auf 400°C auftreten können.

Besonders bevorzugt ist es, wenn die direkt an die Membranschicht angrenzende Einzelschicht der Diffusionssperrschicht auf ihrer dem Substrat abgewandten Oberfläche bei einer Temperatur von 20 °C einen spezifischen elektrischen Widerstand von kleiner als 10000 µΩcm, insbesondere von kleiner als 1000 µΩcm, aufweist. Dadurch wird die Membranschicht homogener abgeschieden.
Im Hinblick auf das flexible Substrat hat sich als Material Edelstahl bewährt.

Die direkt an die Membranschicht angrenzende Einzelschicht der Diffusionssperrschicht wird vorzugsweise aus einem Metallnitrid gebildet. Dabei sind insbesondere die Metallnitride mit mindestens einem Metall der Gruppe Titan, Zirkon, Hafnium, Vanadium, Niob, Tantal, Chrom, Molybdän und Wolfram bevorzugt. Metallnitride weisen einen geringen spezifischen elektrischen Widerstand auf und lassen sich galvanisch direkt mit der Membranschicht beschichten. Als besonders geeignet hat sich hier das Titannitrid erwiesen. Neben den Metallen Titan, Zirkon, Hafnium, Vanadium, Niob, Tantal, Chrom, Molybdän und Wolfram kann das Metallnitrid zusätzlich Aluminium enthalten.

Weiterhin hat es sich bewährt, wenn die direkt an die Membranschicht angrenzende Einzelschicht der Diffusionssperrschicht aus einem Metalloxid gebildet ist. Insbesondere sind hier unterstöchiometrische Metalloxide bevorzugt, die eine besonders gute elektrische Leitfähigkeit aufweisen. Dabei hat sich insbesondere ein unterstöchiometrisches Titanoxid bewährt.
Des weiteren sind die Edelmetalloxide Rutheniumoxid RuO, RuO₂ oder Ru₂O₃ bzw. Iridiumoxid IrO, IrO₂ oder Ir₂O₃ bevorzugt. Auch eine Verwendung von Rhodiumoxid RhO oder Rh₂O₃ hat sich bewährt. Diese Edelmetalloxide weisen einen geringen spezifischen elektrischen Widerstand auf, so dass ein direkter galvanischer Auftrag der Membranschicht möglich ist.

Außerdem hat es sich bewährt, die direkt an die Membranschicht angrenzende Einzelschicht der Diffusionssperrschicht aus einem Metallcarbid zu bilden. Bewährt haben sich hier Metallcarbide mit mindestens einem Metall der Gruppe Titan, Zirkon, Hafnium, Vanadium, Niob, Tantal, Chrom, Molybdän und Wolfram. Diese Metallcarbide weisen einen geringen spezifischen elektrischen Widerstand auf und lassen sich galvanisch direkt mit der Membranschicht beschichten. Besonders bevorzugt ist in diesem Zusammenhang das Wolframcarbid. Das Metallcarbid kann dabei eingelagerten Kohlenstoff enthalten, der die Funktionsweise nicht beeinträchtigt.

Weiterhin hat es sich bewährt, wenn die direkt an die Membranschicht angrenzende Einzelschicht der Diffusionssperrschicht aus einem Metalloxynitrid gebildet ist. Bevorzugt ist dabei ein Metalloxynitrid mit mindestens einem Metall der Gruppe Titan, Zirkon und Hafnium, das sich direkt galvanisch mit der Membranschicht beschichten lässt. Besonders bevorzugt ist dabei das Titanoxynitrid. Neben dem mindestens einen Metall der Gruppe Titan, Zirkon und Hafnium kann das Metalloxynitrid außerdem Aluminium enthalten.

Weiterhin hat es sich bewährt, wenn die direkt an die Membranschicht angrenzende Einzelschicht der Diffusionssperrschicht aus einem Metallcarbonitrid gebildet ist. Besonders bewährt haben sich dabei die galvanisch direkt mit der Membranschicht beschichtbaren Metallcarbonitride, die mit mindestens einem Metall der Gruppe Vanadium, Niob, Tantal, Chrom, Molybdän und Wolfram gebildet sind. Besonders bevorzugt ist dabei das Titancarbonitrid. Auch Niobcarbonitride, wie beispielsweise NbC_{0,3}N_{0,7}, sind geeignet.

Außerdem hat es sich bewährt, wenn die direkt an die Membranschicht angrenzende Einzelschicht der Diffusionssperrschicht aus einem Metallborid gebildet ist. Geeignete, galvanisch direkt mit der Membranschicht beschichtbare Metallboride sind beispielsweise mit mindestens einem Metall der Gruppe Niob, Titan, Zirkon, Cer und Barium gebildet. Besonders bevorzugt sind hier das Cerhexaborid CeB₆, das Titandiborid TiB₂ sowie das Niobborid NbB bzw. das Niobdiborid NbB₂.

Das flexible metallische Substrat ist vorzugsweise aus Metallfasern gebildet, wobei die Zwischenräume zwischen den Metallfasern eine Breite und Länge von jeweils < 5 µm aufweisen oder die freien Lochflächen zwischen den Metallfasern ein rundes Flächenäquivalent mit einem Durchmesser von < 5 µm aufweisen. Das Substrat kann dabei aus einem Gewebe, Filz oder Vlies gebildet sein.

Das Substrat kann aber auch aus einer Folie gebildet sein, die aus gesintertem Metallpulver hergestellt wurde.

Um das Abscheiden der Diffusionssperrschicht zu erleichtern ist es bevorzugt, die Zwischenräume oder offenen Poren auf der, der Diffusionssperrschicht zugewandten Seite des Substrats teilweise mit Metallpartikeln oder einer Mischung von Metallpartikeln mit Keramikpartikeln oder einer Mischung von Metallpartikeln mit Glaspartikeln oder einer Mischung von Metallpartikeln mit Keramik- und Glaspartikeln zu füllen, welche mit den Metallfasern oder der Folie versintert werden. Dadurch wird die Porenstruktur im Oberflächenbereich feiner und die Oberfläche glatter. Zusätzlich kann das so vorbehandelte Substrat vor oder nach der Versinterung einem Walzvorgang unterzogen werden, um die Oberfläche gänzlich einzuebenen.

Mindestens für die direkt an die Membranschicht angrenzende Einzelschicht der Diffusionssperrschicht ist eine offene Porosität, die durch Poren mit einem Porendurchmesser von 20 nm bis 500 nm gebildet ist, erforderlich.

Mindestens für die direkt an die Membranschicht angrenzende Einzelschicht der Diffusionssperrschicht ist eine Herstellung durch physikalische Dampfphasenabscheidung (PVD), insbesondere durch Kathodenzerstäubung, bevorzugt. Bewährt hat sich außerdem eine Bildung durch chemische Dampfphasenabscheidung (CVD) oder durch ein Sol-Gel-Verfahren. Weiterhin kann mindestens die direkt an die Membranschicht angrenzende Einzelschicht der Diffusionssperrschicht durch Partikel mit einer mittleren Korngröße < 0.5 µm gebildet sein, die miteinander versintert sind. Alle Verfahren sind dazu geeignet, eine starre, nicht-selbsttragende, offen-poröse und/oder Mikrorisse aufweisende, nicht-metallisch anorganische Diffusionssperrschicht zu bilden, die spröde und kompakt ist und haftfest mit dem Substrat verbunden ist.

Die bevorzugte Dicke der direkt an die Membranschicht angrenzenden Einzelschicht der Diffusionssperrschicht liegt im Bereich von 0.1 µm bis 5 µm.

Weiterhin kann die Diffusionssperrschicht auf der dem Substrat abgewandten Oberfläche mit einer Keimschicht belegt sein, deren chemische Zusammensetzung mindestens teilweise der der Membranschicht entspricht. Dabei muss die Keimschicht nicht unbedingt eine geschlossene Schicht sein, sondern kann sich auch aus einzelnen Materialinseln, die in keinem Zusammenhang stehen, zusammensetzen. Die galvanische Abscheidung der Membranschicht kann durch solch eine Keimschicht beschleunigt werden und zugleich vergleichmäßigt und ihre Haftung an der Diffusionssperrschicht verbessert werden.

Die mindestens eine Membranschicht wird vorzugsweise aus Palladium oder einer Palladiumlegierung gebildet. Besonders geeignet sind hier auch die Palladiumlegierungen Pd - 8at.% Cd, Pd - 8 at.% Y, Pd - 5,7 at.% Ce oder Pd- 25 at.% Ag. Aber auch jede andere wasserstoffpermeable, geschlossene metallische Schicht ist als Membranschicht geeignet.

Eine Dicke im Bereich von 0.5 µm bis 15 µm ist für die mindestens eine Membranschicht bevorzugt.
Die mindestens eine Membranschicht kann auf ihrer der mindestens einen Diffusionssperrschicht abgewandten Oberfläche mit katalytisch aktivem Material belegt sein. Als katalytisch aktive Materialien sind hier insbesondere Platin, Ruthenium oder Rhodium bevorzugt. Aber auch die katalytisch aktiven Legierungen aus Platin-Palladium, Ruthenium-Palladium, Rhodium-Palladium oder Palladium-Seltenerdmetall haben sich bewährt.

Das Problem wird für das Verfahren dadurch gelöst, dass mindestens die direkt an die Membranschicht angrenzende Einzelschicht der Diffusionssperrschicht mittels PVD, CVD, einem Sol-Gel-Verfahren oder durch Aufsintem von Pulverpartikeln mit einer Korngröße < 0.5 µm gebildet wird, und dass anschließend die mindestens eine Membranschicht galvanisch auf der dem Substrat abgewandten Oberfläche der Diffusionssperrschicht abgeschieden wird.
Die Herstellung geeigneter, offen-poröser und/oder Mikrorisse aufweisender, an die Membranschicht angrenzende Einzelschichten durch Kathodenzerstäuben beziehungsweise Sputtern ist beispielsweise für TiN-Schichten aus der Veröffentlichung "Influence of the sputtering gas on the preferred orientation of nanocrystalline titanium nitride thin films" ( R. Banerjee, R. Chandra, P. Ayyub, Thin Solid Films, 405, (2002), 64 - 72 ) bekannt.

Die dem Substrat abgewandte Oberfläche der Diffusionssperrschicht wird vorzugsweise mit einer Keimschicht belegt, deren chemische Zusammensetzung zumindest teilweise der der Membranschicht entspricht. Dadurch wird die Abscheidung der Membranschicht beschleunigt, vergleichmäßigt und ihre Haftung an der Diffusionssperrschicht verbessert.

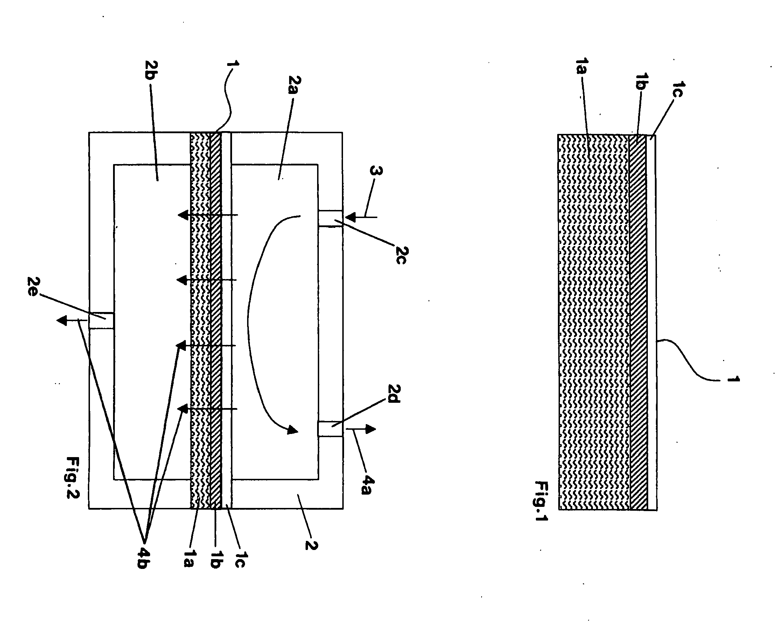

Die Figuren 1 und 2 sollen den Aufbau einer erfindungsgemäßen Kompositmembran sowie einer Messeinrichtung zur Bestimmung der Membraneigenschaften beispielhaft erläutern.
So zeigt
- Fig. 1: eine Kompositmembran im Querschnitt und
- Fig. 2: eine Messeinrichtung zur Bestimmung der Membraneigenschaften.

Fig. 1 zeigt eine Kompositmembran 1, die sich aus einem flexiblen, metallischen Substrat 1a, einer starren, nicht-selbsttragenden, nicht-metallisch anorganischen Diffusionssperrschicht 1b und einer wasserstoffpermeablen, nicht-porösen metallischen Membranschicht 1c aus Palladium zusammensetzt. Die Diffusionssperrschicht 1b kann dabei aus mehreren Einzelschichten gebildet sein, wobei mindestens die direkt an die Membranschicht 1c angrenzende Einzelschicht der Diffusionssperrschicht 1b offen-porös ist und/oder Mikrorisse aufweist und auf ihrer dem Substrat 1a abgewandten Oberfläche bei einer Temperatur von 20 °C einen spezifischen elektrischen Widerstand von kleiner als 10 Ωcm aufweist. Auf dieser leitfähigen Oberfläche ist die Membranschicht 1c galvanisch abgeschieden. Weist die Diffusionssperrschicht auch nicht-poröse oder rissfreie Einzelschichten auf, so müssen diese aus einem wasserstoffpermeablen Material gebildet sein.

Fig. 2 zeigt eine Kompositmembran 1 mit dem Substrat 1a, der Diffusionssperrschicht 1b und der Membranschicht 1c in einer Messeinrichtung 2, wobei die Kompositmembran 1 das Innere der Messeinrichtung 2 in zwei Kammern 2a, 2b teilt. Die erste Kammer 2a der Messeinrichtung 2, die auf der Seite der Membranschicht 1c angeordnet ist, besitzt eine Einlassöffnung 2c für ein zu trennendes Gas 3. Das Gas 3 strömt zur Kompositmembran 1, wo der Gasanteil 4b (= Permeat ) des Gases 3, für den die Kompositmembran 1 permeabel ist, durch die Kompositmembran 1 in die zweite Kammer 2b tritt. Das Restgas 4a entweicht durch eine Auslassöffnung 2d, während das Permeat 4b durch eine Öffnung 2e aus der zweiten Kammer 2b abgezogen wird.

Nachfolgende Beispiele 1 bis 5 sollen die Herstellung einer erfindungsgemäßen Kompositmembran beispielhaft verdeutlichen. Tabelle 1 zeigt schließlich die in einer Messeinrichtung gemäß Figur 2 bestimmten Wasserstoff-Permeationsraten dieser Kompositmembranen bei unterschiedlichen Temperaturen.

### Beispiel 1:

Zur Herstellung einer Kompositmembran 1 wurde ein offen-poröses Substrat 1a aus Edelstahl in einer Dicke von 0.3 mm gereinigt und einseitig mit einer Suspension beschichtet, die Nickelpulver mit einer Korngröße von < 1 µm enthielt, um große Poren zu füllen und Unebenheiten der Oberfläche des Substrates 1a auszugleichen. Das Nickelpulver wurde mit dem Substrat 1a bei 600°C ca. 1 Stunde lang haftfest versintert. Das so behandelte, abgekühlte Substrat 1a wurde anschließend in einem Ultraschallbad von noch losen Nickelpartikeln gereinigt. Auf die behandelte Oberfläche des Substrats 1a wurde nun eine Diffusionssperrschicht 1b aus TiN in einer Dicke von 2 µm durch Kathodenzerstäubung aufgebracht. Die aus nur einer Einzelschicht bestehende Diffusionssperrschicht 1b wurde nun auf der dem Substrat 1a abgewandten, elektrisch leitfähigen Oberfläche galvanisch direkt mit einer 4 µm dicken Membranschicht 1c aus Palladium beschichtet. Die galvanische Abscheidung des Palladium erfolgte aus einem alkalischen Elektrolyten. Anschließend wurde die Kompositmembran 1 über ca. 10 min. in dest. Wasser gekocht, um Reste des Elektrolyten zu entfernen.
Das Trennverhalten dieser Kompositmembran 1 wurde durch separate Bestimmung der Stickstoff- und Wasserstoff-Durchflussraten in der Messeinrichtung 2 gemäß Figur 2 bestimmt. Dazu wurde die Kompositmembran 1 auf der Seite der Membranschicht 1c einmal mit reinem Wasserstoff und einmal mit reinem Stickstoff beaufschlagt ( Druckverhältnisse siehe Beschreibung zu Tabelle 1 ) und jeweils der Volumenstrom an Permeat 4b durch die Kompositmembran 1 gemessen. Das Verhältnis der Volumenströme H₂/N₂ ist vor allem ein Maß für die Dichtigkeit der Membranschicht 1c c beziehungsweise für die Anzahl an unerwünschten Poren und Fehlstellen in der Membranschicht 1c. Ein Wert von H₂/N₂ < 500 gibt beispielsweise an, dass das Trennverhalten der Kompositmembran gering und die Anzahl an Poren oder Fehlstellen in der Membranschicht 1 c hoch ist.
Das Verhältnis H₂/N₂ wies bei dieser Kompositmembran bei 300°C einen Wert von > 5500 und bei 450°C einen Wert von > 8000 auf, was auf ein optimales Trennverhalten schließen lässt.

### Beispiel 2:

Zur Herstellung einer Kompositmembran 1 wurde wie in Beispiel 1 ein offen-poröses Substrat 1a aus Edelstahl in einer Dicke von 0.3 mm gereinigt und einseitig mit einer Suspension beschichtet, die Nickelpulver mit einer Korngröße < 1 µm enthielt, um große Poren zu füllen und Unebenheiten der Oberfläche des Substrates 1a auszugleichen. Das Nickelpulver wurde mit dem Substrat 1a bei 600°C ca. 1 Stunde lang haftfest versintert. Das so behandelte, abgekühlte Substrat 1a wurde anschließend in einem Ultraschallbad von noch losen Nickelpartikeln gereinigt. Auf die behandelte Oberfläche des Substrats 1a wurde nun eine Diffusionssperrschicht 1b aus TiN in einer Dicke von 2 µm durch Kathodenzerstäubung aufgebracht. Die aus nur einer Einzelschicht gebildete Diffusionssperrschicht 1b wurde auf der dem Substrat 1a abgewandten, elektrisch leitfähigen Oberfläche durch ein Imprägnierverfahren mit Palladiumkeimen belegt, die keine geschlossene Schicht bildeten, sondern in Inseln vorlagen. Nun wurde die bekeimte Oberfläche der Diffusionssperrschicht 1 b galvanisch direkt mit einer 4 µm dicken Membranschicht 1c aus Palladium beschichtet. Die galvanische Abscheidung des Palladium erfolgte aus einem alkalischen Elektrolyten. Anschließend wurde die Kompositmembran über ca. 10 min. in dest. Wasser gekocht, um Reste des Elektrolyten zu entfernen.

### Beispiel 3:

Zur Herstellung einer Kompositmembran 1 wurde ein offen-poröses Substrat 1a aus Edelstahl in einer Dicke von 0.25 mm gereinigt. Auf das Substrat 1a wurde nun einseitig zur Bildung einer aus zwei Einzelschichten aufgebauten Diffusionssperrschicht 1b ein Aluminiumoxid-Sol ( z.B. Nyacol AL20^{®} der PQ Corporation ) aufgebracht, um große Poren zu füllen und Unebenheiten der Oberfläche des Substrates 1a auszugleichen. Das Substrat 1a wurde getrocknet und bei 650°C ca. 2 Stunden lang getempert, so dass eine kratzfeste Aluminiumoxidschicht als erste Einzelschicht der Diffusionssperrschicht 1 b entstand. Zur Fertigstellung der Diffusionssperrschicht 1b wurde auf die dem Substrat 1a abgewandte Seite der ersten Einzelschicht aus Aluminiumoxid nun eine zweite Einzelschicht aus TiN in einer Dicke von 2 µm durch Kathodenzerstäubung aufgebracht. Die dem Substrat 1a abgewandte, elektrisch leitfähige Oberfläche der Diffusionssperrschicht 1 b beziehungsweise der zweiten Einzelschicht wurde nun galvanisch direkt mit einer 5,5 µm dicken Membranschicht 1 c aus Palladium beschichtet. Die galvanische Abscheidung des Palladium erfolgte aus einem alkalischen Elektrolyten. Anschließend wurde die Kompositmembran über ca. 10 min. in dest. Wasser gekocht, um Reste des Elektrolyten zu entfernen.
Das Trennverhalten dieser Kompositmembran wurde durch separate Bestimmung der Stickstoff- und Wasserstoff-Durchflussraten bestimmt ( siehe Beispiel 1 ). Das H₂/N₂-Verhältnis wies bei 300°C einen Wert von 4500 und bei 400°C einen Wert von > 7000 auf.

### Beispiel 4:

Zur Herstellung einer Kompositmembran 1 wurde ein offen-poröses Substrat 1a aus Edelstahl in einer Dicke von 0.25 mm im Ultraschallbad gereinigt und einseitig mittels Siebdruck mit einer Paste beschichtet, die Nickelpulver mit einer Korngröße von ≤ 1 µm sowie ein Aluminiumoxid-Sol ( z.B. Nyacol AL20^{®} ) enthielt. Die Paste wurde hergestellt, indem das Nickelpulver mit einer geringen Menge 2-Propanol versetzt und ca. 3 min. im Ultraschallbad homogenisiert wurde. Darunter wurde Aluminiumoxid-Sol gemischt und durch Einrühren von etwas HNO₃ eine siebdruckfähige Paste hergestellt. Große Poren des Substrates 1a wurden mit der Paste gefüllt und Unebenheiten der Oberfläche des Substrates 1a ausgeglichen. Nach dem Trocknen der Paste wurden die Nickel-Aluminiumoxid-Schicht ( die aufgrund des metallischen Anteils dem Substrat und nicht der Diffusionssperrschicht zuzurechnen ist ) und das Substrat 1a bei 600°C ca. 2 Stunden lang haftfest versintert. Auf die so behandelte Oberfläche des Substrats 1a wurde nun eine Diffusionssperrschicht 1b aus TiN in einer Dicke von 1,5 µm durch Kathodenzerstäubung aufgebracht. Die Diffusionssperrschicht 1 b wurde auf der dem Substrat 1a abgewandten, elektrisch leitfähigen Oberfläche durch ein Imprägnierverfahren mit Palladiumkeimen belegt, die keine geschlossene Schicht bildeten, sondern in Inseln vorlagen. Nun wurde die bekeimte Oberfläche der Diffusionssperrschicht 1 b galvanisch direkt mit einer 6,5 µm dicken Membranschicht 1c aus Palladium beschichtet. Die galvanische Abscheidung des Palladium erfolgte aus einem alkalischen Elektrolyten. Anschließend wurde die Kompositmembran über ca. 10 min. in dest. Wasser gekocht, um Reste des Elektrolyten zu entfernen.
Das Trennverhalten dieser Kompositmembran wurde durch separate Bestimmung der Stickstoff- und Wasserstoff-Durchflussraten bestimmt ( siehe Bespiel 1 ). Das H₂/N₂-Verhältnis wies bei 300°C einen Wert von 6000 und bei 400°C einen Wert von > 8000 auf.

### Beispiel 5:

Zur Herstellung einer Kompositmembran 1 wurde ein offen-poröses Substrat 1a aus Edelstahl in einer Dicke von 0.3 mm gereinigt. Auf die gereinigte Oberfläche des Substrats 1a wurde nun eine Diffusionssperrschicht 1b aus unterstöchiometrischem IrO_{0,7} in einer Dicke von 1,5 µm durch Kathodenzerstäubung aufgebracht. Die aus nur einer Einzelschicht bestehende Diffusionssperrschicht 1 b wurde nun auf der dem Substrat 1 a abgewandten, elektrisch leitfähigen Oberfläche galvanisch direkt mit einer 6 µm dicken Membranschicht 1c aus der Palladium-SilberLegierung enthaltend 25 Gew.-% Ag beschichtet. Anschließend wurde die Kompositmembran 1 über ca. 10 min. in dest. Wasser gekocht, um Reste des Elektrolyten zu entfernen.
Das Trennverhalten dieser Kompositmembran wurde durch separate Bestimmung der Stickstoff- und Wasserstoff-Durchflussraten bestimmt ( siehe Beispiel 1 ).
Das Verhältnis H₂/N₂ wies bei dieser Kompositmembran bei 300°C einen Wert von 6000 und bei 400°C einen Wert von > 8000 auf, was auf ein optimales Trennverhalten schließen lässt.

Nachfolgende Tabelle 1 zeigt die Wasserstoff-Permeationsraten ( bei Normalbedingungen ) der Kompositmembranen aus den Beispielen 1, 3, 4 und 5 nach 50h Betriebsdauer bei unterschiedlichen Temperaturen, wobei der Gasdruck des zu trennenden Gases 3 einen Wert von 4 bar (absolut) und der Gasdruck des Permeats 4b einen Wert von 1 bar (absolut) aufwies. Die Fläche der getesteten Kompositmembran betrug jeweils 10 cm².

**Tabelle 1**

| | H₂-Permeationsrate [m³/m²h] | | | |
|---|---|---|---|---|
| Temperatur [°C] | Beispiel 1 | Beispiel 3 | Beispiel 4 | Beispiel 5 |
| 300 | 51 | 32 | 24 | 72 |
| 400 | 85 | 54 | 42 | 81 |
| 450 | 98 | - | - | - |

## Patentansprüche

1. Kompositmembran (1), mit einem flexiblen aus Metallfasern oder einer aus gesintertem Metallpulver hergestellten Folie gebildeten Substrat (1a) und einem auf mindestens einer Oberfläche des Substrats angeordneten Schichtsystem, wobei das Schichtsystem aus einer starren, nicht-selbsttragenden, nicht-metallisch anorganischen Diffusionssperrschicht (1b) und mindestens einer wasserstoffpermeablen, nicht-porösen metallischen Membranschicht (1c) gebildet ist, wobei die Diffusionssperrschicht zwischen dem Substrat und der mindestens einen Membranschicht angeordnet ist und aus mindestens einer Einzelschicht gebildet ist, **gekennzeichnet dadurch, dass** mindestens die direkt an die Membranschicht angrenzende Einzelschicht der Diffusionssperrschicht offen-porös mit einem Porendurchmesser von 20 nm bis 500 nm ist und auf ihrer dem Substrat abgewandten Oberfläche bei einer Temperatur von 20°C einen spezifischen elektrischen Widerstand von kleiner als 10 Ωcm aufweist, und das Substrat eine offene Porosität im Bereich von 15 % bis 60 % aufweist und die mindestens eine Membranschicht galvanisch auf der dem Substrat abgewandten Oberfläche der Diffusionssperrschicht abgeschieden ist.

2. Kompositmembran nach Anspruch 1, **dadurch gekennzeichnet, dass** die direkt an die Membranschicht angrenzende Einzelschicht der Diffusionssperrschicht (1b) auf ihrer dem Substrat abgewandten Oberfläche bei einer Temperatur von 20°C einen spezifischen elektrischen Widerstand von kleiner als 10000 µΩcm aufweist.

3. Kompositmembran nach Anspruch 2, **dadurch gekennzeichnet, dass** die direkt an die Membranschicht angrenzende Einzelschicht der Diffusionssperrschicht (1b) auf ihrer dem Substrat abgewandten Oberfläche bei einer Temperatur von 20°C einen spezifischen elektrischen Widerstand von kleiner als 1000 µΩcm aufweist.

4. Kompositmembran nach einem der Ansprüche 1 bis 3, **dadurch gekennzeichnet, dass** das Substrat (1a) aus Edelstahl gebildet ist.

5. Kompositmembran nach einem der Ansprüche 1 bis 4, **dadurch gekennzeichnet, dass** die direkt an die Membranschicht angrenzende Einzelschicht der Diffusionssperrschicht (1b) aus einem Metallnitrid gebildet ist.

6. Kompositmembran nach Anspruch 5, **dadurch gekennzeichnet, dass** das Metallnitrid mit mindestens einem Metall der Gruppe Titan, Zirkon, Hafnium, Vanadium, Niob, Tantal, Chrom, Molybdän und Wolfram gebildet ist.

7. Kompositmembran nach Anspruch 6, **dadurch gekennzeichnet, dass** die direkt an die Membranschicht angrenzende Einzelschicht der Diffusionssperrschicht (1b) aus Titannitrid TiN gebildet ist.

8. Kompositmembran nach Anspruch 6, **dadurch gekennzeichnet, dass** das Metallnitrid neben dem mindestens einen Metall der Gruppe Titan, Zirkon, Hafnium, Vanadium, Niob, Tantal, Chrom, Molybdän und Wolfram zusätzlich Aluminium enthält.

9. Kompositmembran nach einem der Ansprüche 1 bis 4, **dadurch gekennzeichnet, dass** die direkt an die Membranschicht angrenzende Einzelschicht der Diffusionssperrschicht (1b) aus einem Metalloxid gebildet ist.

10. Kompositmembran nach Anspruch 9, **dadurch gekennzeichnet, dass** das Metalloxid eine Unterstöchiometrie aufweist.

11. Kompositmembran nach Anspruch 10, **dadurch gekennzeichnet, dass** das Metalloxid ein unterstöchiometrisches Titanoxid ist.

12. Kompositmembran nach einem der Ansprüche 9 bis 10, **dadurch gekennzeichnet, dass** die direkt an die Membranschicht angrenzende Einzelschicht der Diffusionssperrschicht (1b) aus Rutheniumoxid RuO oder RuO₂ oder Ru₂O₃ gebildet ist.

13. Kompositmembran nach einem der Ansprüche 9 bis 10, **dadurch gekennzeichnet, dass** die direkt an die Membranschicht angrenzende Einzelschicht der Diffusionssperrschicht (1b) aus Iridiumoxid IrO oder IrO₂ oder Ir₂O₃ gebildet ist.

14. Kompositmembran nach einem der Ansprüche 9 bis 10, **dadurch gekennzeichnet, dass** die direkt an die Membranschicht angrenzende Einzelschicht der Diffusionssperrschicht (1b) aus oder Rhodiumoxid RhO oder Rh₂O₃ gebildet ist.

15. Kompositmembran nach einem der Ansprüche 1 bis 4, **dadurch gekennzeichnet, dass** die direkt an die Membranschicht angrenzende Einzelschicht der Diffusionssperrschicht (1b) aus einem Metallcarbid gebildet ist.

16. Kompositmembran nach Anspruch 15, **dadurch gekennzeichnet, dass** das Metallcarbid mit mindestens einem Metall der Gruppe Titan, Zirkon, Hafnium, Vanadium, Niob, Tantal, Chrom, Molybdän und Wolfram gebildet ist.

17. Kompositmembran nach Anspruch 16, **dadurch gekennzeichnet, dass** die direkt an die Membranschicht angrenzende Einzelschicht der Diffusionssperrschicht (1b) aus Wolframcarbid WC gebildet ist.

18. Kompositmembran nach einem der Ansprüche 15 bis 17, **dadurch gekennzeichnet, dass** das Metallcarbid eingelagerten Kohlenstoff enthält.

19. Kompositmembran nach einem der Ansprüche 1 bis 4, **dadurch gekennzeichnet, dass** die direkt an die Membranschicht angrenzende Einzelschicht der Diffusionssperrschicht (1b) aus einem Metalloxinitrid gebildet ist.

20. Kompositmembran nach Anspruch 19, **dadurch gekennzeichnet, dass** das Metalloxinitrid mit mindestens einem Metall der Gruppe Titan, Zirkon und Hafnium gebildet ist.

21. Kompositmembran nach Anspruch 20, **dadurch gekennzeichnet, dass** die direkt an die Membranschicht angrenzende Einzelschicht der Diffusionssperrschicht (1b) aus Titanoxinitrid gebildet ist.

22. Kompositmembran nach Anspruch 20, **dadurch gekennzeichnet, dass** das Metalloxinitrid neben dem mindestens einen Metall der Gruppe Titan, Zirkon und Hafnium zusätzlich Aluminium enthält.

23. Kompositmembran nach einem der Ansprüche 1 bis 4, **dadurch gekennzeichnet, dass** die direkt an die Membranschicht angrenzende Einzelschicht der Diffusionssperrschich (1b) aus einem Metallcarbonitrid gebildet ist.

24. Kompositmembran nach Anspruch 23, **dadurch gekennzeichnet, dass** das Metallcarbonitrid mit mindestens einem Metall der Gruppe Vanadium, Niob, Tantal, Chrom, Molybdän und Wolfram gebildet ist.

25. Kompositmembran nach Anspruch 24, **dadurch gekennzeichnet, dass** die direkt an die Membranschicht angrenzende Einzelschicht der Diffusionssperrschicht (1b) aus Titancarbonitrid TiCN gebildet ist.

26. Kompositmembran nach Anspruch 24, **dadurch gekennzeichnet, dass** die direkt an die Membranschicht angrenzende Einzelschicht der Diffusionssperrschicht (1b) aus NbCₓN_{y} gebildet ist.

27. Kompositmembran nach Anspruch 26, **dadurch gekennzeichnet, dass** die Wertigkeit x den Wert 0,3 und die Wertigkeit y den Wert 0,7 annimmt.

28. Kompositmembran nach einem der Ansprüche 1 bis 4, **dadurch gekennzeichnet, dass** die direkt an die Membranschicht angrenzende Einzelschicht der Diffusionssperrschicht (1b) aus einem Metallborid gebildet ist.

29. Kompositmembran nach Anspruch 28, **dadurch gekennzeichnet, dass** das Metallborid mit mindestens einem Metall der Gruppe Niob, Titan, Zirkon, Cer und Barium gebildet ist.

30. Kompositmembran nach Anspruch 29, **dadurch gekennzeichnet, dass** die direkt an die Membranschicht angrenzende Einzelschicht der Diffusionssperrschicht (1b) aus CeB₆ oder TiB₂ oder NbB oder NbB₂ gebildet ist.

31. Kompositmembran nach einem der Ansprüche 1 bis 30, **dadurch gekennzeichnet, dass** das Substrat (1a) aus Metallfasern gebildet ist, wobei die Zwischenräume zwischen den Metallfasern eine Breite und Länge von jeweils < 5µm aufweisen oder die freien Lochflächen zwischen den Metallfasern ein rundes Flächenäquivalent mit einem Durchmesser von < 5µm aufweisen.

32. Kompositmembran nach Anspruch 31, **dadurch gekennzeichnet, dass** die Zwischenräume oder offenen Poren auf der, der mindestens einen Diffusionssperrschicht (1b) zugewandten Seite des Substrats (1a), teilweise mit Metallpartikeln oder einer Mischung von Metallpartikeln mit Keramik- und/oder Glaspartikeln gefüllt sind, welche mit den Metallfasern oder der Folie versintert sind.

33. Kompositmembran nach einem der Ansprüche 1 bis 32, **dadurch gekennzeichnet, dass** mindestens die direkt an die Membranschicht angrenzende Einzelschicht der Diffusionssperrschicht (1b) durch PVD (Physikalische Dampfphasenabscheidung) gebildet ist.

34. Kompositmembran nach Anspruch 33, **dadurch gekennzeichnet, dass** mindestens die direkt an die Membranschicht angrenzende Einzelschicht der Diffusionssperrschicht (1b) durch Kathodenzerstäubung gebildet ist.

35. Kompositmembran nach einem der Ansprüche 1 bis 34, **dadurch gekennzeichnet, dass** die direkt an die Membranschicht angrenzende Einzelschicht der Diffusionssperrschicht (1b) durch CVD ( chemische Dampfphasenabscheidung ) gebildet ist.

36. Kompositmembran nach einem der Ansprüche 1 bis 32, **dadurch gekennzeichnet, dass** mindestens die direkt an die Membranschicht angrenzende Einzelschicht der Diffusionssperrschicht (1b) durch ein Sol-Gel-Verfahren gebildet ist.

37. Kompositmembran nach einem der Ansprüche 1 bis 32, **dadurch gekennzeichnet, dass** mindestens die direkt an die Membranschicht angrenzende Einzelschicht der Diffusionssperrschicht (1b) durch Partikel mit einer mittleren Kerngröße < 0.5 µm gebildet ist, die miteinander versintert sind.

38. Kompositmembran nach einem der Ansprüche 1 bis 37, **dadurch gekennzeichnet, dass** die direkt an die Membranschicht angrenzende Einzelschicht der Diffusionssperrschicht (1b) eine Dicke im Bereich von 0.1 µm bis 5 µm aufweist.

39. Kompositmembran nach einem der Ansprüche 1 bis 38, **dadurch gekennzeichnet, dass** die Diffusionssperrschicht (1b) auf der dem Substrat abgewandten Oberfläche mit einer Keimschicht belegt ist, deren chemische Zusammensetzung zumindest teilweise der der Membranschicht (1c) entspricht.

40. Kompositmembran nach einem der Ansprüche 1 bis 39, **dadurch gekennzeichnet, dass** die mindestens eine Membranschicht (1c) aus Palladium oder einer Palladiumlegierung gebildet ist.

41. Kompositmembran nach einem der Ansprüche 1 bis 40, **dadurch gekennzeichnet, dass** die mindestens eine Membranschicht (1c) eine Dicke im Bereich von 0.5 µm bis 15 µm aufweist.

42. Kompositmembran nach einem der Ansprüche 1 bis 41, **dadurch gekennzeichnet, dass** die mindestens eine Membranschicht (1c) auf ihrer der Diffusionssperrschicht abgewandten Oberfläche mit katalytisch aktivem Material belegt ist.

43. Kompositmembran nach Anspruch 42, **dadurch gekennzeichnet, dass** das katalytisch aktive Material aus Platin oder Ruthenium oder Rhodium gebildet ist.

44. Kompositmembran nach Anspruch 42, **dadurch gekennzeichnet, dass** das katalytisch aktive Material aus einer Platin-Palladium-Legierung oder einer Ruthenium-Palladium-Legierung oder einer Rhodium-Palladium-Legierung oder einer Palladium-Seltenerdmetall-Legierung gebildet ist.

45. Verfahren zur Herstellung einer Kompositmembran nach einem der Ansprüche 1 bis 44, **dadurch gekennzeichnet, dass** mindestens die direkt an die Membranschicht (1c) angrenzende Einzelschicht der Diffusionssperrschicht (1b) mittels PVD, CVD, einem Sol-Gel-Verfahren oder durch Aufsintem von Pulverpartikeln mit einer mittleren Korngröße < 0.5µm gebildet wird, und dass anschließend die mindestens eine Membranschicht (1c) galvanisch auf der dem Substrat abgewandten Oberfläche der Diffusionssperrschicht abgeschieden wird.

46. Verfahren nach Anspruch 45, **dadurch gekennzeichnet, dass** die dem Substrat abgewandte Oberfläche der Diffusionssperrschicht (1b) mit einer Keimschicht belegt wird, deren chemische Zusammensetzung zumindest teilweise der Membranschicht (1c) entspricht.

## Claims

1. Composite membrane (1) having a flexible substrate (1a) that is formed from metal fibers or a foil made from sintered metal powder, and a layer system that is arranged on at least one surface of the substrate, whereby the layer system is formed from a rigid, non-self-supporting, non-metallic inorganic diffusion barrier layer (1b) and at least one hydrogen-permeable, non-porous metallic membrane layer (1c), whereby the diffusion barrier layer is arranged between the substrate and the at least one membrane layer and is formed from at least one single layer, **characterized in that** at least the single layer of the diffusion barrier layer that is directly adjacent to the membrane layer is open-porous and has a pore diameter of 20 nm to 500 nm and has a specific electric resistance of less than 10 Ωcm at a temperature of 20°C on its surface facing away from the substrate, and the substrate has an open porosity in the range from 15 % to 60 % and the at least one membrane layer is deposited by means of electroplating on the surface of the diffusion barrier layer facing away from the substrate.

2. Composite membrane according to claim 1, **characterized in that** the single layer of the diffusion barrier layer (1 b) that is directly adjacent to the membrane layer has a specific electrical resistance of less than 10,000 µΩcm at a temperature of 20°C on its surface facing away from the substrate.

3. Composite membrane according to claim 2, **characterized in that** the single layer of the diffusion barrier layer (1 b) that is directly adjacent to the membrane layer has a specific electrical resistance of less than 1,000 µΩcm at a temperature of 20°C on its surface facing away from the substrate.

4. Composite membrane according to any one of the claims 1 to 3, **characterized in that** the substrate (1a) is formed from stainless steel.

5. Composite membrane according to any one of the claims 1 to 4, **characterized in that** the single layer of the diffusion barrier layer (1 b) that is directly adjacent to the membrane layer is formed from a metal nitride.

6. Composite membrane according to claim 5, **characterized in that** the metal nitride is formed to have at least one metal from the group of titanium, zirconium, hafnium, vanadium, niobium, tantalum, chromium, molybdenum, and tungsten.

7. Composite membrane according to claim 6, **characterized in that** the single layer of the diffusion barrier layer (1 b) that is directly adjacent to the membrane layer is formed from titanium nitride TiN.

8. Composite membrane according to claim 6, **characterized in that** the metal nitride, in addition, contains aluminum, aside from the at least one metal from the group of titanium, zirconium, hafnium, vanadium, niobium, tantalum, chromium, molybdenum, and tungsten.

9. Composite membrane according to any one of the claims 1 to 4, **characterized in that** the single layer of the diffusion barrier layer (1 b) that is directly adjacent to the membrane layer is formed from a metal oxide.

10. Composite membrane according to claim 9, **characterized in that** the metal oxide is present in substoichiometric amounts.

11. Composite membrane according to claim 10, **characterized in that** the metal oxide is substoichiometric titanium oxide.

12. Composite membrane according to any one of the claims 9 to 10, **characterized in that** the single layer of the diffusion barrier layer (1 b) that is directly adjacent to the membrane layer is formed from ruthenium oxide RuO or RuO₂ or Ru₂O₃.

13. Composite membrane according to any one of the claims 9 to 10, **characterized in that** the single layer of the diffusion barrier layer (1 b) that is directly adjacent to the membrane layer is formed from iridium oxide IrO or IrO₂ or Ir₂O₃.

14. Composite membrane according to any one of the claims 9 to 10, **characterized in that** the single layer of the diffusion barrier layer (1 b) that is directly adjacent to the membrane layer is formed from or rhodium oxide RhO or Rh₂O₃.

15. Composite membrane according to any one of the claims 1 to 4, **characterized in that** the single layer of the diffusion barrier layer (1 b) that is directly adjacent to the membrane layer is formed from a metal carbide.

16. Composite membrane according to claim 15, **characterized in that** the metal carbide is formed to have at least one metal from the group of titanium, zirconium, hafnium, vanadium, niobium, tantalum, chromium, molybdenum, and tungsten.

17. Composite membrane according to claim 16, **characterized in that** the single layer of the diffusion barrier layer (1 b) that is directly adjacent to the membrane layer is formed from tungsten carbide WC.

18. Composite membrane according to any one of the claims 15 to 17, **characterized in that** the tungsten carbide contains incorporated carbon.

19. Composite membrane according to any one of the claims 1 to 4, **characterized in that** the single layer of the diffusion barrier layer (1 b) that is directly adjacent to the membrane layer is formed from a metal oxynitride.

20. Composite membrane according to claim 19, **characterized in that** the metal oxynitride is formed to have at least one metal from the group of titanium, zirconium, and hafnium.

21. Composite membrane according to claim 20, **characterized in that** the single layer of the diffusion barrier layer (1 b) that is directly adjacent to the membrane layer is formed from titanium oxynitride.

22. Composite membrane according to claim 20, **characterized in that** the metal oxynitride, in addition, contains aluminum, aside from the at least one metal from the group of titanium, zirconium, and hafnium.

23. Composite membrane according to any one of the claims 1 to 4, **characterized in that** the single layer of the diffusion barrier layer (1 b) that is directly adjacent to the membrane layer is formed from a metal carbonitride.

24. Composite membrane according to claim 23, **characterized in that** the metal carbonitride is formed to have at least one metal from the group of vanadium, niobium, tantalum, chromium, molybdenum, and tungsten.

25. Composite membrane according to claim 24, **characterized in that** the single layer of the diffusion barrier layer (1 b) that is directly adjacent to the membrane layer is formed from titanium carbonitride TiCN.

26. Composite membrane according to claim 24, **characterized in that** the single layer of the diffusion barrier layer (1b) that is directly adjacent to the membrane layer is formed from NbCₓN_{y}.

27. Composite membrane according to claim 26, **characterized in that** the valence x assumes the value 0.3 and the valence y assumes the value 0.7.

28. Composite membrane according to any one of the claims 1 to 4, **characterized in that** the single layer of the diffusion barrier layer (1 b) that is directly adjacent to the membrane layer is formed from a metal boride.

29. Composite membrane according to claim 28, **characterized in that** the metal boride is formed to have at least one metal from the group of niobium, titanium, zirconium, cerium, and barium.

30. Composite membrane according to claim 29, **characterized in that** the single layer of the diffusion barrier layer (1 b) that is directly adjacent to the membrane layer is formed from CeB₆ or TiB₂ or NbB or NbB₂.

31. Composite membrane according to any one of the claims 1 to 30, **characterized in that** the substrate (1a) is formed from metal fibers, whereby the intervening spaces between the fibers have a width and length of < 5 µm each or the free hole areas between the metal fibers have a circular area equivalent with a diameter of < 5 µm each.

32. Composite membrane according to claim 31, **characterized in that** the intervening spaces or open pores, on the side of the substrate (1 a) facing the at least one diffusion barrier layer (1 b), are partially filled with metal particles or a mixture of metal particles and ceramic and/or glass particles that are co-sintered to the metal fibers or the foil.

33. Composite membrane according to any one of the claims 1 to 32, **characterized in that** at least the single layer of the diffusion barrier layer (1 b) that is directly adjacent to the membrane layer is formed by PVD (physical vapor phase deposition).

34. Composite membrane according to claim 33, **characterized in that** at least the single layer of the diffusion barrier layer (1 b) that is directly adjacent to the membrane layer is formed by cathode vaporization.

35. Composite membrane according to any one of the claims 1 to 34, **characterized in that** the single layer of the diffusion barrier layer (1 b) that is directly adjacent to the membrane layer is formed by CVD (chemical vapor phase deposition).

36. Composite membrane according to any one of the claims 1 to 32, **characterized in that** at least the single layer of the diffusion barrier layer (1 b) that is directly adjacent to the membrane layer is formed by a sol-gel procedure.

37. Composite membrane according to any one of the claims 1 to 32, **characterized in that** at least the single layer of the diffusion barrier layer (1 b) that is directly adjacent to the membrane layer is formed by particles with a mean grain size < 0.5 µm that are co-sintered to each other.

38. Composite membrane according to any one of the claims 1 to 37, **characterized in that** the thickness of the single layer of the diffusion barrier layer (1 b) that is directly adjacent to the membrane layer is in the range from 0.1 µm to 5 µm.

39. Composite membrane according to any one of the claims 1 to 38, **characterized in that** the diffusion barrier layer (1b) is covered on its surface facing away from the substrate by a germ layer whose chemical composition corresponds at least in part to that of the membrane layer (1 c).

40. Composite membrane according to any one of the claims 1 to 39, **characterized in that** the at least one membrane layer (1c) is formed from palladium or a palladium alloy.

41. Composite membrane according to any one of the claims 1 to 40, **characterized in that** the thickness of the at least one membrane layer (1 c) is in the range from 0.1 µm to 15 µm.

42. Composite membrane according to any one of the claims 1 to 41, **characterized in that** the at least one membrane layer (1 c) is covered by catalytically active material on its surface facing away from the diffusion barrier layer.

43. Composite membrane according to claim 42, **characterized in that** the catalytically active material is formed from platinum or ruthenium or rhodium.

44. Composite membrane according to claim 42, **characterized in that** the catalytically active material is formed from a platinum-palladium alloy or a ruthenium-palladium alloy or a rhodium-palladium alloy or a palladium-rare earth metal alloy.

45. Method for the manufacture of a composite membrane according to any one of the claims 1 to 44, **characterized in that** at least the single layer of the diffusion barrier layer (1 b) that is directly adjacent to the membrane layer (1 c) is formed by PVD, CVD, a sol-gel procedure or by sintering of powder particles with a mean grain size < 0.5 µm, and **in that**, subsequently, the at least one membrane layer (1c) is deposited by electroplating on the surface of the diffusion barrier layer that faces away from the substrate.

46. Method according to claim 45, **characterized in that** the surface of the diffusion barrier layer (1 b) facing away from the substrate is covered by a germ layer whose chemical composition corresponds at least in part to that of the membrane layer (1 c).

## Revendications

1. Membrane composite (1) avec un substrat (1a) flexible, constitué de fibres de métal ou d'une feuille fabriquée en poudre de métal frittée, et un système de couches situé sur au moins une surface du substrat, le système de couches étant constitué d'une couche barrière de diffusion (1 b) rigide, non autoportante, inorganique non métallique et d'au moins une couche membranaire (1c) métallique perméable à l'hydrogène, non poreuse, la couche barrière de diffusion étant située entre le substrat et l'au moins une couche membranaire et étant constituée d'au moins une couche individuelle, **caractérisée en ce qu'**au moins la couche individuelle de la couche barrière de diffusion directement adjacente à la couche membranaire a une porosité ouverte avec un diamètre des pores de 20 nm à 500 nm et présente une résistance électrique spécifique inférieure à 10 Ωcm sur sa surface opposée au substrat à une température de 20 °C et le substrat présente une porosité ouverte de l'ordre de 15% à 60% et l'au moins une couche membranaire est déposée galvaniquement sur la surface de la couche barrière de diffusion opposée au substrat.

2. Membrane composite selon la revendication 1, **caractérisée en ce que** la couche individuelle de la couche barrière de diffusion (1 b) directement adjacente à la couche membranaire présente une résistance électrique spécifique inférieure à 10000 µΩcm sur sa surface opposée au substrat à une température de 20 °C.

3. Membrane composite selon la revendication 2, **caractérisée en ce que** la couche individuelle de la couche barrière de diffusion (1b) directement adjacente à la couche membranaire présente une résistance électrique spécifique inférieure à 1000 µΩcm sur sa surface opposée au substrat à une température de 20 °C.

4. Membrane composite selon l'une des revendications 1 à 3, **caractérisée en ce que** le substrat (1 a) est constitué d'acier fin.

5. Membrane composite selon l'une des revendications 1 à 4, **caractérisée en ce que** la couche individuelle de la couche barrière de diffusion (1 b) directement adjacente à la couche membranaire est constituée d'un nitrure de métal.

6. Membrane composite selon la revendication 5, **caractérisée en ce que** le nitrure de métal est constitué d'au moins un métal choisi dans le groupe constitué par le titane, le zirconium, le hafnium, le vanadium, le niobium, le tantale, le chrome, le molybdène et le tungstène.

7. Membrane composite selon la revendication 6, **caractérisée en ce que** la couche individuelle de la couche barrière de diffusion (1 b) directement adjacente à la couche membranaire est constituée de nitrure de titane TiN.

8. Membrane composite selon la revendication 6, **caractérisée en ce que** le nitrure de métal, outre l'au moins un métal choisi dans le groupe constitué par le titane, le zirconium, le hafnium, le vanadium, le niobium, le tantale, le chrome, le molybdène et le tungstène, contient additionnellement de l'aluminium.

9. Membrane composite selon l'une des revendications 1 à 4, **caractérisée en ce que** la couche individuelle de la couche barrière de diffusion (1 b) directement adjacente à la couche membranaire est constituée d'un oxyde de métal.

10. Membrane composite selon la revendication 9, **caractérisée en ce que** l'oxyde de métal présente une sous-stoechiométrie.

11. Membrane composite selon la revendication 10, **caractérisée en ce que** l'oxyde de métal est un oxyde de titane sous-stoechiométrique.

12. Membrane composite selon l'une des revendications 9 à 10, **caractérisée en ce que** la couche individuelle de la couche barrière de diffusion (1 b) directement adjacente à la couche membranaire est constituée d'oxyde de ruthénium RuO ou RuO₂ ou Ru₂O₃.

13. Membrane composite selon l'une des revendications 9 à 10, **caractérisée en ce que** la couche individuelle de la couche barrière de diffusion (1 b) directement adjacente à la couche membranaire est constituée d'oxyde d'iridium IrO ou IrO₂ ou Ir₂O₃.

14. Membrane composite selon l'une des revendications 9 à 10, **caractérisée en ce que** la couche individuelle de la couche barrière de diffusion (1 b) directement adjacente à la couche membranaire est constituée d'oxyde de rhodium RhO ou Rh₂O₃.

15. Membrane composite selon l'une des revendications 1 à 4, **caractérisée en ce que** la couche individuelle de la couche barrière de diffusion (1 b) directement adjacente à la couche membranaire est constituée d'un carbure de métal.

16. Membrane composite selon la revendication 15, **caractérisée en ce que** le carbure de métal est constitué d'au moins un métal choisi dans le groupe constitué par le titane, le zirconium, le hafnium, le vanadium, le niobium, le tantale, le chrome, le molybdène et le tungstène.

17. Membrane composite selon la revendication 16, **caractérisée en ce que** la couche individuelle de la couche barrière de diffusion (1b) directement adjacente à la couche membranaire est constituée de carbure de tungstène WC.

18. Membrane composite selon l'une des revendications 15 à 17, **caractérisée en ce que** le carbure de métal contient des inclusions de carbone.

19. Membrane composite selon l'une des revendications 1 à 4, **caractérisée en ce que** la couche individuelle de la couche barrière de diffusion (1b) directement adjacente à la couche membranaire est constituée d'un oxynitrure de métal.

20. Membrane composite selon la revendication 19, **caractérisée en ce que** l'oxynitrure de métal est constitué d'au moins un métal choisi dans le groupe constitué par le titane, le zirconium et le hafnium.

21. Membrane composite selon la revendication 20, **caractérisée en ce que** la couche individuelle de la couche barrière de diffusion (1 b) directement adjacente à la couche membranaire est constituée d'oxynitrure de titane.

22. Membrane composite selon la revendication 20, **caractérisée en ce que** l'oxynitrure de métal, outre l'au moins un métal choisi dans le groupe constitué par le titane, le zirconium et le hafnium, contient additionnellement de l'aluminium.

23. Membrane composite selon l'une des revendications 1 à 4, **caractérisée en ce que** la couche individuelle de la couche barrière de diffusion (1 b) directement adjacente à la couche membranaire est constituée d'un carbonitrure de métal.

24. Membrane composite selon la revendication 23, **caractérisée en ce que** le carbonitrure de métal est constitué d'au moins un métal choisi dans le groupe constitué par le vanadium, le niobium, le tantale, le chrome, le molybdène et le tungstène.

25. Membrane composite selon la revendication 24, **caractérisée en ce que** la couche individuelle de la couche barrière de diffusion (1 b) directement adjacente à la couche membranaire est constituée de carbonitrure de titane TiCN.

26. Membrane composite selon la revendication 24, **caractérisée en ce que** la couche individuelle de la couche barrière de diffusion (1 b) directement adjacente à la couche membranaire est constituée de NbCₓN_{y}.

27. Membrane composite selon la revendication 26, **caractérisée en ce que** la valence x prend la valeur 0,3 et la valence y, la valeur 0,7.

28. Membrane composite selon l'une des revendications 1 à 4, **caractérisée en ce que** la couche individuelle de la couche barrière de diffusion (1b) directement adjacente à la couche membranaire est constituée d'un borure de métal.

29. Membrane composite selon la revendication 28, **caractérisée en ce que** le borure de métal est constitué d'au moins un métal choisi dans le groupe constitué par le niobium, le titane, le zirconium, le cérium et le baryum.

30. Membrane composite selon la revendication 29, **caractérisée en ce que** la couche individuelle de la couche barrière de diffusion (1 b) directement adjacente à la couche membranaire est constituée de CeB₆ ou de TiB₂ ou de NbB ou de NbB₂.

31. Membrane composite selon l'une des revendications 1 à 30, **caractérisée en ce que** le substrat (1 a) est constitué de fibres de métal, les interstices entre les fibres de métal présentant une largeur et une longueur de respectivement < 5 µm ou les surfaces de trous libres entre les fibres de métal présentant un équivalent de surface circulaire ayant un diamètre de < 5 µm.

32. Membrane composite selon la revendication 31, **caractérisée en ce que** les interstices ou pores ouverts sur la face du substrat (1a) tournée vers l'au moins une couche barrière de diffusion (1 b) sont remplis partiellement de particules de métal ou d'un mélange de particules de métal et de particules céramiques et / ou de verre qui sont frittées avec les fibres de métal ou la feuille.

33. Membrane composite selon l'une des revendications 1 à 32, **caractérisée en ce qu'**au moins la couche individuelle de la couche barrière de diffusion (1 b) directement adjacente à la couche membranaire est constituée par PVD (dépôt physique en phase vapeur).

34. Membrane composite selon la revendication 33, **caractérisée en ce qu'**au moins la couche individuelle de la couche barrière de diffusion (1 b) directement adjacente à la couche membranaire est constituée par pulvérisation cathodique.

35. Membrane composite selon l'une des revendications 1 à 34, **caractérisée en ce que** la couche individuelle de la couche barrière de diffusion (1 b) directement adjacente à la couche membranaire est constituée par CVD (dépôt chimique en phase vapeur).

36. Membrane composite selon l'une des revendications 1 à 32, **caractérisée en ce qu'**au moins la couche individuelle de la couche barrière de diffusion (1 b) directement adjacente à la couche membranaire est constituée par un procédé sol-gel.

37. Membrane composite selon l'une des revendications 1 à 32, **caractérisée en ce qu'**au moins la couche individuelle de la couche barrière de diffusion (1 b) directement adjacente à la couche membranaire est constituée par des particules ayant une grosseur de grain moyenne < 0.5 µm, lesquelles sont frittées ensemble.

38. Membrane composite selon l'une des revendications 1 à 37, **caractérisée en ce que** la couche individuelle de la couche barrière de diffusion (1b) directement adjacente à la couche membranaire présente une épaisseur de l'ordre de 0.1 µm à 5 µm.

39. Membrane composite selon l'une des revendications 1 à 38, **caractérisée en ce que** la couche barrière de diffusion (1b), sur la surface opposée au substrat, est garnie d'une couche de germination dont la composition chimique correspond au moins en partie à celle de la couche membranaire (1c).

40. Membrane composite selon l'une des revendications 1 à 39, **caractérisée en ce que** l'au moins une couche membranaire (1 c) est constituée de palladium ou d'un alliage de palladium.

41. Membrane composite selon l'une des revendications 1 à 40, **caractérisée en ce que** l'au moins une couche membranaire (1 c) présente une épaisseur de l'ordre de 0.5 µm à 15 µm.

42. Membrane composite selon l'une des revendications 1 à 41, **caractérisée en ce que** l'au moins une couche membranaire (1 c), sur sa surface opposée à la couche barrière de diffusion, est garnie d'un matériau catalytiquement actif.

43. Membrane composite selon la revendication 42, **caractérisée en ce que** le matériau catalytiquement actif est constitué de platine ou de ruthénium ou de rhodium.

44. Membrane composite selon la revendication 42, **caractérisée en ce que** le matériau catalytiquement actif est constitué d'un alliage de platine et de palladium ou d'un alliage de ruthénium et de palladium ou d'un alliage de rhodium et de palladium ou d'un alliage de palladium et de métal de terres rares.

45. Procédé pour la fabrication d'une membrane composite selon l'une des revendications 1 à 44, **caractérisé en ce qu'**au moins la couche individuelle de la couche barrière de diffusion (1 b) directement adjacente à la couche membranaire (1 c) est constituée par PVD, CVD, au moyen d'un procédé sol-gel ou par agglomération par frittage de particules de poudre avec une grosseur de grain moyenne < 0.5 µm et **en ce que**, ensuite, l'au moins une couche membranaire (1c) est déposée galvaniquement sur la surface de la couche barrière de diffusion opposée au substrat.

46. Procédé selon la revendication 45, **caractérisé en ce que** la surface de la couche barrière de diffusion (1 b) opposée au substrat est garnie d'une couche de germination dont la composition chimique correspond au moins partiellement à la couche membranaire (1 c).
